# FASCICULE DE BREVET EUROPEEN

(11) **EP 0 581 620 B1**
(45) Date de publication et mention de la délivrance du brevet: **11.02.1998**
(21) Numéro de dépôt: 93401165.1
(22) Date de dépôt: 06.05.1993
(51) Int. Cl.: C03B 23/03, C03B 23/035, C03B 35/24

(54) **Procédé et dispositifs pour le bombage de vitrages en position horizontale**
Verfahren und Vorrichtungen zum Biegen von Glasscheiben in horizontaler Lage
Method and apparatusses for bending glass sheets in a horizontal position

(30) Priorité: 09.05.1992 DE 4215285
(43) Date de publication de la demande: 02.02.1994
(73) Titulaire: SAINT-GOBAIN VITRAGE, 92400 Courbevoie (FR); VEGLA Vereinigte Glaswerke GmbH, 52066 Aachen (DE)
(72) Inventeur: Kuster, Hans-Werner, W-5100 Aachen (DE); Vanaschen, Luc, B-4700 Eupen (BE)
(74) Mandataire: Menes, Catherine

(56) Documents cités:
- EP-A- 0 169 770
- EP-A- 0 183 418
- EP-A- 0 290 346
- FR-A- 2 085 931

## Description

La présente invention concerne un procédé pour le bombage de vitrages dans lequel les vitrages, en position horizontale, sont chauffés à température de bombage dans un four équipé d'un convoyeur qui les transporte dans une chambre de bombage dans laquelle ils sont soulevés et appliqués contre une forme supérieure de bombage, convexe, installée au-dessus du plan de transport des vitrages pour être bombés dans leur forme finale puis sont transportés, à l'aide d'un cadre annulaire ouvert en son centre dont le pourtour correspond à la forme finale du vitrage, dans un poste de refroidissement situé en aval de la chambre de bombage. L'invention concerne, en outre, des dispositifs pour l'exécution du procédé.

Un procédé du type spécifié est connu des brevets EP-B1-169 770 ou son équivalent US-A-4 682 997. Selon ce procédé, le transfert des vitrages du four à la chambre de bombage s'effectue sur des rouleaux transporteurs entraînés, placés dans le prolongement du convoyeur à rouleaux du four. Dans la chambre de bombage, les vitrages sont soulevés des rouleaux transporteurs par un courant de gaz chaud ascendant et sont pressés contre la forme supérieure de bombage au moyen de ce courant gazeux.

Un autre procédé du type spécifié est décrit dans le brevet FR-B1-2 085 464 ou son équivalent US-A-3 778 244. Dans ce procédé enseigné par ces documents, le transporteur à rouleaux se prolonge également à partir du four continu à rouleaux jusque dans la chambre de bombage. Dans ce cas, les vitrages sont soulevés des rouleaux transporteurs au moyen d'une dépression créée au voisinage du bord périphérique de la forme supérieure de bombage.

La qualité optique et la précision du galbe sont améliorées si, dans la chambre de bombage, les vitrages sont positionnés d'une manière très précise sur le convoyeur (en général un convoyeur à rouleaux) avant d'être soulevés par le courant gazeux ascendant ou par l'aspiration et d'être pressés contre la forme supérieure de bombage, ceci de manière à les amener dans la position correcte par rapport à la forme supérieure de bombage. Cette opération de positionnement prend un certain temps et participe à la détermination de la durée d'un cycle de bombage.

L'invention a pour but de développer le procédé de bombage spécifié plus haut, de telle sorte que la durée d'un cycle de bombage soit dans l'ensemble raccourcie et qu'ainsi la rentabilité du procédé soit accrue.

Suivant l'invention, ce but est réalisé par le fait que les vitrages, à l'intérieur du four, sont soulevés du convoyeur au moyen d'un plateau-ventouse, sont déposés sur un cadre annulaire de transfert qui vient se positionner sous la forme supérieure de bombage dans une position telle que les vitrages sont alors dans la position correcte pour le bombage par rapport à la forme supérieure de bombage.

Dans le cas du procédé conforme à l'invention, l'opération de positionnement des vitrages par rapport à la forme supérieure de bombage est effectuée en deux stades : un premier stade dans lequel les vitrages sont amenés dans une position précise par rapport à un élément intermédiaire guidé mécaniquement, à savoir le cadre de transfert, et un second stade dans lequel le cadre de transfert est déplacé dans sa position extrême définie en dessous de la forme supérieure de bombage. Ce second stade du positionnement qui correspond au transport du cadre de transfert portant le vitrage peut s'opérer d'une manière très précise et relativement rapide. Par contre, le premier stade de positionnement prend sensiblement plus de temps mais conformément à un mode de réalisation avantageux de l'invention, il peut être effectué alors que le vitrage précédent est encore dans la chambre de bombage, soit qu'il subisse son bombage soit qu'il n'ait pas encore été évacué de la chambre de bombage.

Dans son ensemble, le cycle de bombage peut être nettement raccourci et, de cette façon, la rentabilité du procédé est améliorée.

L'invention s'applique notamment aux procédés de bombage selon lesquels le vitrage est soulevé et appliqué contre la forme supérieure au moyen d'un courant gazeux chaud ascendant ou au moyen d'une aspiration due à une dépression créée au voisinage du bord périphérique ou au travers de la forme supérieure de bombage.

L'invention a également pour objet un dispositif de bombage particulièrement adapté au procédé selon l'invention, dispositif qui, de manière connue, comporte un four, équipé d'un convoyeur, une chambre de bombage avec une forme supérieure de bombage, convexe, montée mobile vers le haut et vers le bas au-dessus du plan de transport des vitrages et des moyens pour produire une pression de gaz différentielle afin de soulever les vitrages du plan de transport contre la forme supérieure de bombage, un poste de refroidissement situé en aval de la chambre de bombage et un cadre annulaire de moulage ouvert en son centre, déplaçable entre la chambre de bombage et le poste de refroidissement pour transporter les vitrages bombés dans le poste de refroidissement et qui comporte en outre un plateau ventouse monté mobile au-dessus de l'extrémité avale du convoyeur, un poste intermédiaire situé entre la chambre de bombage et ladite extrémité avale du convoyeur et un cadre de transfert déplaçable entre une position située en dessous du plateau-ventouse et une position extrême située en dessous de la forme supérieure de bombage et des moyens pour positionner le vitrage par rapport au cadre de transfert.

D'autres détails et caractéristiques avantageuses de l'invention ressortent de la description suivante de divers exemples de réalisation du procédé de l'invention ainsi que des dispositifs convenant pour son exécution faite en référence aux dessins annexés qui représentent, vus selon une coupe longitudinale verticale d'un four de bombage :
* **figure 1** : une première forme de réalisation d'un dispositif convenant pour l'exécution du procédé de l'invention,
* **figure 2** : une deuxième fcrme de réalisation d'un dispositif pour l'exécution du procédé,
* **figure 3 :** une troisième forme de réalisation d'un dispositif convenant pour le procédé de l'invention.

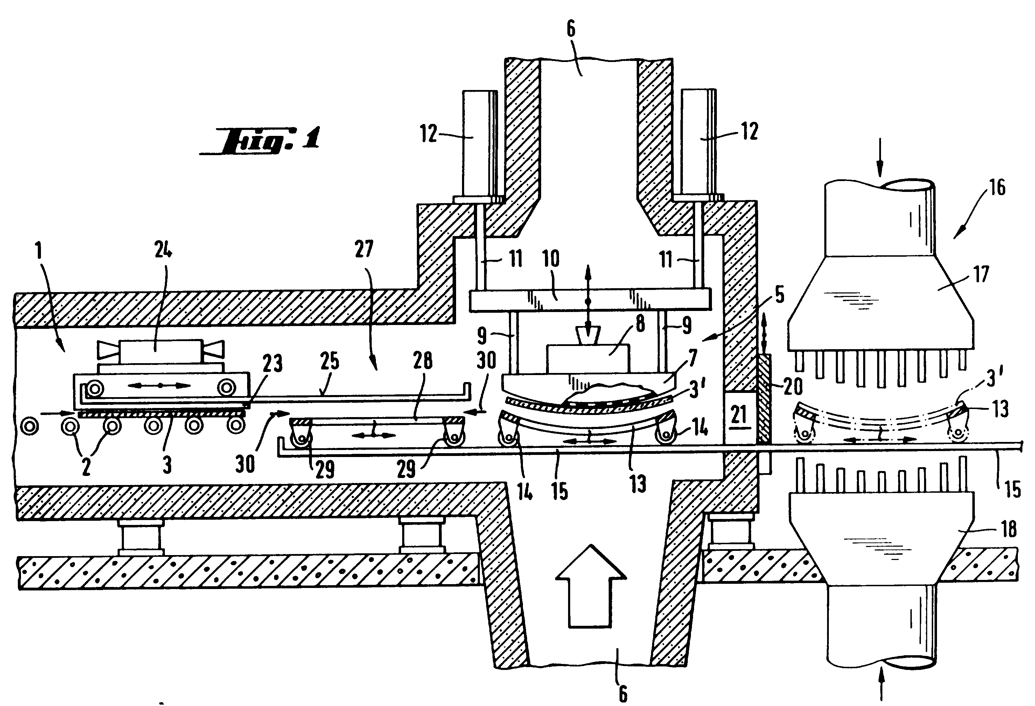

L'installation illustrée figure 1 comprend un four continu à rouleaux 1 traversé par un convoyeur 2 formé de rouleaux transporteurs entraînés sur lesquels les vitrages plats 3 sont chauffés, pendant leur avancement continu jusqu'à leur température de bombage. Elle comprend, en outre, une chambre de bombage 5 située à l'intérieur d'un conduit d'écoulement vertical 6 dans lequel un courant d'air chaud présentant un débit volumique prédéterminé, s'écoule de bas en haut pendant le processus de bombage. Ce courant gazeux chaud, soulève le vitrage 3 et le presse contre une forme supérieure de bombage 7 constituée d'un moule de bombage convexe, plein. La face tournée vers le bas de la forme 7 est pourvue d'ouvertures pouvant être mises en communication avec un espace creux qui peut être mis en surpression par un ventilateur 8. La forme de bombage 7 est fixée à un cadre 10 par des entretoises 9, le cadre pouvant être déplacé vers le haut et vers le bas par l'intermédiaire de tiges 11 et d'un mécanisme de levage 12.

Un cadre de moulage 13 en forme d'anneau, coopère avec la forme supérieure de bombage 7, la surface de bombage supérieure de cet anneau correspondant à la forme souhaitée du vitrage et est de ce fait complémentaire de celle de la forme supérieure de bombage 7. Le cadre de moulage 13 est déplaçable dans le sens longitudinal du four via des roues 14, sur des rails 15. A l'aide de ce cadre de moulage 13, le vitrage bombé 3' est transporté dans le poste de refroidissement 16 qui suit la chambre de bombage 5. Dans ce poste de refroidissement 16 sont installés des caissons de soufflage adéquats 17, 18 par lesquels l'air de refroidissement est dirigé sur les vitrages bombés 3' pendant que ceux-ci se trouvent sur le cadre de moulage 13. Pendant cette opération de refroidissement, la porte 20 ferme l'ouverture 21 par laquelle les vitrages sont évacués de la chambre de bombage 5.

Au-dessus des derniers rouleaux transporteurs 2, à l'intérieur du four continu 1, est installé un plateau ventouse plat 23 déplaçable horizontalement, qui est équipé d'un ventilateur aspirant 24. Le plateau ventouse 23 peut voyager dans un sens et dans l'autre sur des rails 25 entre la position extrême amont située au-dessus des rouleaux transporteurs 2 et une position extrême aval située dans un poste intermédiaire 27 installé entre les rouleaux transporteurs 2 et la chambre de bombage 5.

Un cadre de transfert 28, monté sur des roues 29, peut se déplacer entre le poste intermédiaire 27 et la chambre de bombage 5. Le cadre de transfert 28 est par exemple constitué par un anneau à surface plane adapté au contour du vitrage. Cependant, il est également possible, d'utiliser un anneau à surface légèrement courbe ou légèrement bombée, de sorte que le vitrage subisse, sous l'effet de la pesanteur, déjà une légère déformation préalablement au bombage effectué dans la chambre de bombage 5. Les dispositifs d'entraînement du plateau ventouse 23, le cadre de transfert 28 et le cadre de moulage 13, qui sont des constructions courantes, ne sont pas représentés sur les dessins par souci de simplicité.

Dans le poste intermédiaire 27 sont, en outre, installés des moyens de positionnement, par exemple des poussoirs, qui sont représentés par des flèches 30. A l'aide de ces poussoirs, les vitrages déposés sur le cadre de transfert 28 sont ajustés dans la position correcte par rapport au cadre de transfert 28.

Les moyens destinés à positionner les vitrages sur le cadre de transfert peuvent être montés directement sur celui-ci ou au contraire indépendamment, dans la zone où le plateau ventouse dépose le vitrage sur le cadre de transfert (dans le cas de la figure 1, le poste intermédiaire 27).

A l' l'intérieur d'un cycle de bombage, le procédé se déroule par exemple de la manière suivante. Dès qu'un vitrage 3 chauffé à température de bombage est parvenu à l'extrémité avale du convoyeur 2, il est soulevé au-dessus des rouleaux par le plateau ventouse 23 et est retenu par ce dernier. Le plateau ventouse 23 se déplace à présent avec le vitrage 3, dans le poste intermédiaire 27 et le dépose sur le cadre de transfert 28 qui, à cet instant occupe sa position extrême dans le poste intermédiaire 27. Sur le cadre de transfert 28, le vitrage 3 est amené, à l'aide des poussoirs mobiles 30, dans la position souhaitée par rapport à cet anneau de transfert 28.

Pendant cette opération de transfert et de positionnement, le vitrage précédent 3' se trouve dans la chambre de bombage 5. Ce vitrage est pressé contre la surface convexe de la forme de bombage 7 par le courant gazeux chaud ascendant. Le cadre de moulage 13 qui, entre-temps, est revenu du poste de refroidissement 16, se trouve dans une position de bombage précise, sous la forme de bombage supérieure 7. La forme de bombage 7 est alors abaissée et presse le vitrage 3 déjà largement prébombé, contre le cadre de moulage 13. A cet instant, sous l'effet d'une brève surpression dans l'espace creux à l'intérieur de la forme de bombage 7, le vitrage 3' est détaché de la forme de bombage 7 qui revient dans sa position extrême supérieure.

Dès que la forme de bombage 7 a libéré le chemin pour le cadre de moulage 13 et le cadre de transfert 28, la porte 20 s'ouvre et le cadre de moulage 13 pénètre avec le vitrage bombé 3' dans le poste de refroidissement 16. Simultanément, le cadre de transfert 28 portant le vitrage 3, entre-temps positionné sur sa surface, passe du poste intermédiaire 27 à la chambre de bombage 5. Lorsque le cadre de transfert 28 atteint sa position extrême avale, le courant gazeux chaud est enclenché, ce qui soulève le vitrage et le presse contre la forme de bombage 7 de façon à lui conférer une forme proche de la forme souhaitée. Le cadre de transfert 28 revient à présent à sa position de départ et libère à nouveau la chambre de bombage 5 pour le cadre de moulage 13 qui, après que le vitrage précédent ait été refroidi et retiré de lui, revient dans la chambre de bombage 5 et occupe sa position extrême amont en dessous de la forme supérieure de bombage. L'opération décrite recommence alors.

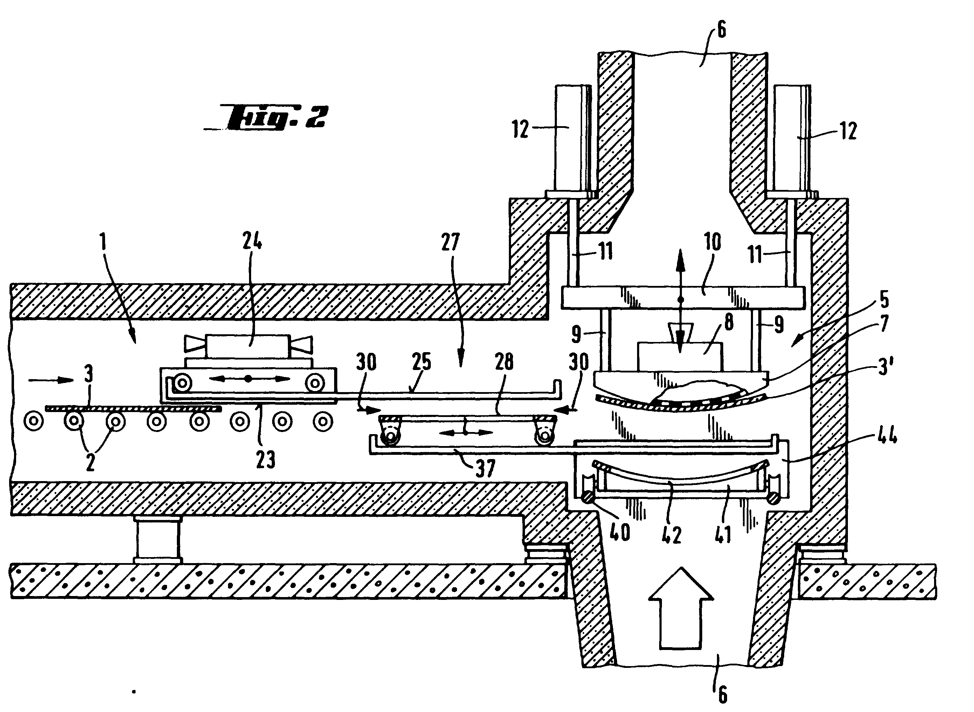

Un raccourcissement supplémentaire des durées de cycle d'un tel four de bombage peut être obtenu au moyen d'un dispositif tel que représenté sur la figure 2. Dans ce cas, le transfert des vitrages plans 3, entre le poste intermédiaire 27 et la chambre de bombage 5 et le transport des vitrages bombés 3' entre la chambre de bombage 5 et le poste de refroidissement s'effectuent d'une manière entièrement indépendante, selon des directions différentes. Le poste de refroidissement est ainsi installé latéralement. De la sorte, il est possible de prévoir, à côté de la chambre de bombage, de part et d'autre de celle-ci, deux postes de refroidissement dans lesquels les vitrages bombés sont transférés en alternance.

L'installation de la figure 2 comprend à nouveau un four continu 1, un poste intermédiaire 27 et une chambre de bombage 5 qui sont disposés successivement, dans le sens de l'axe longitudinal du four. Le plateau ventouse 23 déplaçable sur les rails 25 transfère à nouveau les vitrages 3 chauffés à température de bombage, du convoyeur 2 au poste intermédiaire 27 où attend le cadre de transfert 28 qui peut être déplacé sur des rails 37, jusqu'à une position définie en dessous de la forme supérieure de bombage 7.

Dans le poste de bombage 5, en dessous des rails 37, sont installés des rails 40 perpendiculaires aux rails 37 et sur lesquels deux chariots 41 sont déplaçables, chaque chariot portant un cadre de moulage 42. La chambre de bombage 5 est pourvue dans chacune de ses deux parois latérales 43 d'une ouverture 44. De chaque côté et derrière chaque ouverture 44 se raccorde un poste de refroidissement jusqu'auquel se prolongent les rails 44. Les deux chariots 41 disposés l'un derrière l'autre sont accouplés rigidement, ou deux cadres de bombage 42 sont montés sur un chariot 41 commun et ce, à une distance telle qu'elle corresponde à la distance séparant le poste de bombage d'un poste de refroidissement. Dans la position de travail, un des deux cadres de moulage 42 occupe donc la position définie en dessous du moulage de bombage 7 tandis qu'en même temps, l'autre cadre de moulage occupe sa position extrême dans le poste de refroidissement qui lui est associé.

Le mode de fonctionnement de ce dispositif correspond pour l'essentiel à celui décrit plus haut, c'est-à-dire que le transfert du vitrage 3 du convoyeur 2 au cadre de transfert 28 ainsi que le positionnement du vitrage sur le cadre de transfert 28 s'effectuent pendant que le cadre 10 portant la forme supérieure de bombage 7 est descendu dans la chambre de bombage 5 et que le vitrage précédent est pressé dans sa forme finale et est déposé sur le cadre de moulage 42. Dès que le cadre 10 est ramené en position haute, après le dépôt du vitrage bombé sur le cadre de moulage 42, le chemin pour le cadre de transfert 28 est libéré et celui-ci pénètre dans la chambre de bombage 5 avec le vitrage suivant. Simultanément, ce cadre de moulage 42, portant le vitrage bombé, pénètre dans le poste de refroidissement, tandis que le cadre de moulage alors libéré est déplacé à partir de l'autre poste de refroidissement dans sa position extrême située en dessous du moule de bombage 7.

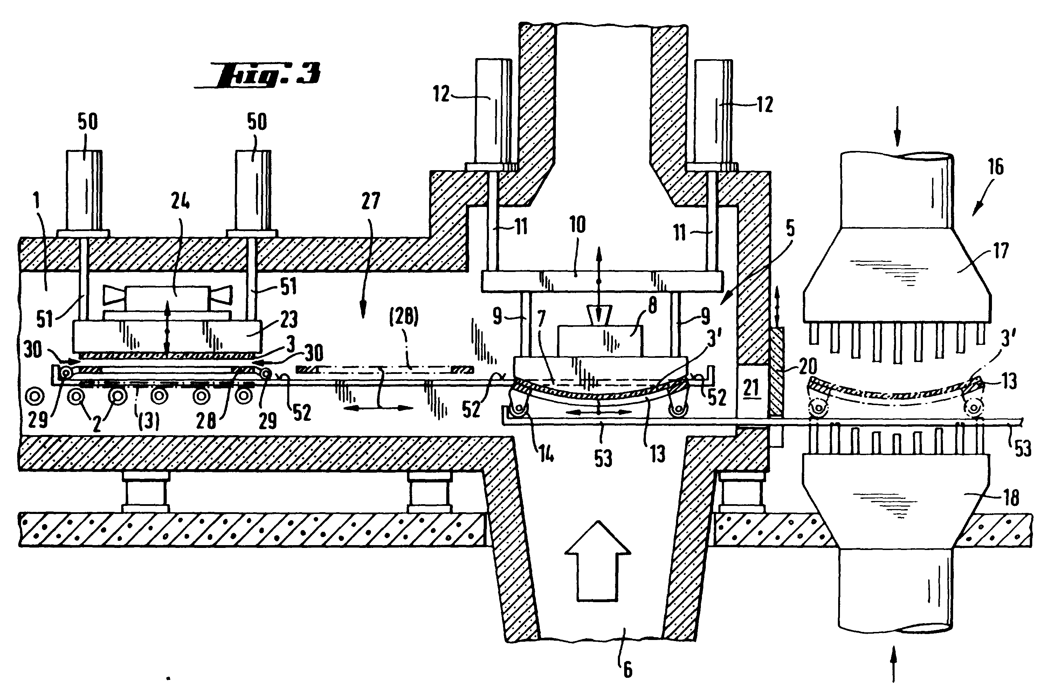

Dans le dispositif représenté sur la figure 3, contrairement aux exemples de réalisation décrits plus haut, le plateau-ventouse 23 n'est pas déplaçable dans le sens horizontal, mais est monté de manière à pouvoir être soulevé et abaissé dans le sens vertical. A cet effet, il est fixé à des tiges 51 qui peuvent être amenées dans diverses positions en hauteur par des dispositifs de levage 50 montés au-dessus du four. De cette façon, le plateau ventouse 23 peut, après l'aspiration du vitrage 3, être élevé suffisamment pour que le cadre de transfert 28, déplacé sur les rails 52, puisse être amené dans sa position extrême en dessous du plateau ventouse 23. Lorsque le vitrage 3 est déposé sur le cadre de transfert 28, des dispositifs mécaniques adéquats comme par exemple les poussoirs 30 indiqués schématiquement, interviennent à nouveau pour assurer le positionnement précis du vitrage 3 par rapport au cadre de transfert 28.

Après une opération de bombage dans la chambre de bombage 5, dès que la forme de bombage 7 est en position haute et le vitrage bombé 3' a été transporté à l'aide du cadre de moulage 13 déplaçable sur les rails 53, dans le poste de refroidissement 16 suivant, le cadre de transfert 28, avec le prochain vitrage 3 positionné sur sa surface, passe de sa première position extrême située en dessous du plateau ventouse 23 à l'autre position extrême située dans la chambre de bombage 5. Immédiatement après que le cadre de transfert 28 a atteint sa position extrême dans la chambre de bombage, l'enclenchement du courant gazeux chaud a pour effet de soulever le vitrage 3 du cadre de transfert 28 et de le presser contre la forme de bombage 7. Le cadre de transfert 28 revient alors dans une position d'attente dans le poste intermédiaire 27 et libère ainsi la chambre de bombage 5 pour l'exécution de l'opération de bombage. Dans le poste intermédiaire 27, le cadre de transfert 28 attend que le plateau ventouse 23 ait soulevé le vitrage 3 suivant des rouleaux transporteurs 2 et soit parvenu dans sa position supérieure. A ce moment, le cadre de transfert 28 revient dans sa position extrême en dessous du plateau ventouse 23 et l'opération décrite recommence.

## Revendications

1. Procédé pour le bombage de vitrages (3) selon lequel les vitrages, en position horizontale, sont chauffés à température de bombage dans un four (1) équipé d'un convoyeur (2), sont transportés dans une chambre de bombage (5) dans laquelle ils sont soulevés et appliqués contre une forme supérieure (7) de bombage, convexe, installée au-dessus du plan de transport des vitrages, pour être bombés dans leur forme finale puis sont transportés à l'aide d'un cadre annulaire de moulage (13) ouvert en son centre dont le pourtour correspond à la forme finale du vitrage, dans un poste de refroidissement (16) situé en aval de la chambre de bombage, **caractérisé en ce que** les vitrages à l'intérieur du four sont soulevés du convoyeur au moyen d'un plateau ventouse (23), sont déposés sur un cadre annulaire de transfert (28) qui vient se positionner dans la chambre de bombage sous la forme supérieure de bombage, dans une position telle que les vitrages sont alors dans la position correcte pour le bombage par rapport à la forme supérieure de bombage.

2. Procédé suivant la revendication 1, **caractérisé en ce que** le positionnement d'un vitrage (3) sur le cadre de transfert (28) s'effectue alors que le vitrage précédent est encore dans la chambre de bombage (5).

3. Procédé suivant la revendication 1 ou 2, **caractérisé en ce que** le transport du vitrage bombé (3') entre la chambre de bombage (5) et le poste de refroidissement (16) et le transport du vitrage suivant par le cadre de transfert (28) s'effectuent simultanément.

4. Procédé suivant l'une quelconque des revendications 1 à 3, **caractérisé en ce que** dans la chambre de bombage (5), les vitrages (3) sont soulevés du cadre de transfert (28) et appliqués contre la forme supérieure (7) de bombage par un courant gazeux chaud ascendant.

5. Procédé suivant l'une quelconque des revendications 1 à 3, **caractérisé en ce que** dans la chambre de bombage (5) les vitrages (3) sont soulevés du cadre de transfert (28) et sont appliqués contre la forme supérieure (7) de bombage par une aspiration due à une dépression créée au travers de la forme supérieure de bombage ou au voisinage de son bord périphérique.

6. Dispositif de bombage de vitrage (3) comportant un four (1) équipé d'un convoyeur (2), une chambre de bombage (5) avec une forme supérieure de bombage (7), convexe, montée mobile vers le haut et vers le bas au-dessus du plan de transport des vitrages et des moyens pour produire une pression de gaz différentielle afin de soulever les vitrages (3) du plan de transport contre la forme supérieure (7) de bombage, un poste de refroidissement (16) situé en aval de la chambre de bombage (5) et un cadre annulaire de moulage (13) ouvert en son centre déplaçable entre la chambre de bombage (7) et le poste de refroidissement (16), **caractérisé par** un plateau-ventouse (23), monté mobile au-dessus de la section d'extrémité avale du convoyeur (2), un poste intermédiaire (27) situé entre la chambre de bombage (5) et ladite section d'extrémité avale du convoyeur (2) et un cadre annulaire de transfert (28) déplaçable entre une position située en dessous du plateau ventouse (23) et une position extrême située en dessous de la forme supérieure (7) et par des moyens (30) pour positionner le vitrage (3) par rapport au cadre de transfert (28).

7. Dispositif suivant la revendication 6, **caractérisé en ce que** le plateau ventouse (23) est déplaçable entre une position extrême située au-dessus de la section d'extrémité du convoyeur (2) et une position extrême située dans le poste intermédiaire (27).

8. Dispositif suivant la revendication 6, **caractérisé en ce que** le plateau ventouse (23) est monté mobile dans le sens vertical au-dessus de la section d'extrémité du convoyeur (2) et le cadre de transfert (28) est déplaçable entre une position extrême, en dessous du plateau ventouse (23) se trouvant en position élevée, et une autre position extrême en dessous de la forme supérieure de bombage (7).

9. Dispositif suivant l'une quelconque des revendications 6 à 8, **caractérisé en ce que** les moyens (30) destinés à positionner les vitrages (3) par rapport au cadre de transfert (28) sont montés sur ledit cadre de transfert (28).

10. Dispositif suivant l'une quelconque des revendications 6 à 8, **caractérisé en ce que** les moyens (30) destinés à positionner les vitrages (3) par rapport au cadre de transfert (28) sont montés, indépendamment de ce dernier, dans le poste intermédiaire (27) ou dans la zone du plateau ventouse (27) monté mobile vers le haut et vers le bas (figure 3).

11. Dispositif suivant l'une quelconque des revendications 6 à 10, **caractérisé en ce que** le cadre de transfert (28) correspond au contour des vitrages et présente une surface annulaire supérieure plane.

12. Dispositif suivant l'une quelconque des revendications 6 à 10, **caractérisé en ce que** le cadre de transfert (28) correspond au contour des vitrages et présente une surface annulaire supérieure légèrement bombée dans le sens du cadre de moulage (13, 42).

13. Dispositif suivant l'une quelconque des revendications 6 à 12, **caractérisé en ce que** les rails (40) portant le cadre de moulage (42) s'étendent dans la chambre de bombage (5) perpendiculairement aux rails (25) portant le cadre de transfert (28) et le poste de refroidissement est installé latéralement à côté de la chambre de bombage (5).

14. Dispositif suivant la revendication 13, **caractérisé par** deux postes de refroidissement disposés de chaque côté de la chambre de bombage (5) et deux cadres de moulage (42) accouplés l'un à l'autre pour les déplacements, séparés par une distance correspondant à la distance entre la chambre de bombage (5) et un poste de refroidissement.

## Patentansprüche

1. Verfahren zum Biegen von Glasscheiben (3), bei dem die Glasscheiben in horizontaler Lage in einem mit einem Förderer (2) versehenen Ofen (1) auf Biegetemperatur erwärmt und in eine Biegekammer (5) überführt werden, in der sie gegen eine oberhalb der Transportebene der Glasscheiben angeordnete konvexe Biegeform (7) angehoben, in ihre endgültige Form gebogen und mit Hilfe eines der endgültigen Form der Glasscheibe entsprechenden Formringes (13) in eine der Biegekammer nachgeschaltete Kühlstation (16) überführt werden, **dadurch gekennzeichnet**, daß die Glasscheiben innerhalb des Ofens mit Hilfe einer Saugplatte (23) von dem Förderer abgehoben und auf einen in die Biegekammer unter die obere Biegeform verfahrbaren Übergabering (28) in einer solchen Position abgelegt werden, daß die Glasscheiben anschließend in Bezug auf die obere Biegeform sich in der zum Biegen korrekten Position befinden.

2. Verfahren nach Anspruch 1, dadurch gekennzeichnet, daß die Positionierung einer Glasscheibe (3) auf dem Übergabering (28) erfolgt, während die vorhergehende Glasscheibe sich in der Biegekammer (5) befindet.

3. Verfahren nach Anspruch 1 oder 2, dadurch gekennzeichnet, daß die Überführung der gebogenen Glasscheibe (3) von der Biegekammer (5) in die Kühlstation (16) und die Überführung der nächstfolgenden Glasscheibe von der Übergabestation in die Biegekammer mit Hilfe des Übergaberings (28) gleichzeitig erfolgen.

4. Verfahren nach einem der Ansprüche 1 bis 3, dadurch gekennzeichnet, daß die Glasscheiben (3) in der Biegekammer (5) durch einen aufwärts strömenden Heißgasstrom von dem Übergabering (28) abgehoben und an die Biegeform (7) angelegt werden.

5. Verfahren nach einem der Ansprüche 1 bis 3, dadurch gekennzeichnet, daß die Glasscheiben (3) in der Biegekammer (5) durch Ansaugen infolge eines Unterdrucks durch die obere Biegeform hindurch oder in der Nähe ihrer Umfangskante von dem Übergabering (28) abgehoben und an die Biegeform (7) angelegt werden.

6. Vorrichtung zum Biegen einer Glasscheibe (3) mit einem mit einem Förderer (2) versehenen Ofen (1), einer Biegekammer (5) mit einer oberhalb der Transportebene der Glasscheiben heb- und senkbar angeordneten konvexen Biegeform (7) und Mitteln zur Erzeugung eines Differenz-Gasdrucks zum Anheben der Glasscheiben (3) von der Transortebene gegen die obere Biegeform (7), einer der Biegekammer (5) nachgeschalteten Kühlstation (16) und einem zwischen der Biegekammer (7) und der Kühlstation (16) verfahrbaren innen offenen Formring (13), gekennzeichnet durch eine oberhalb des Endabschnitts des Förderers (2) beweglich angeordnete Saugplatte (23), eine zwischen der Biegekammer (5) und dem Endabschnitt des Förderers (2) vorgesehenen Zwischenstation (27), einen zwischen einer Stellung unterhalb der Saugplatte (23) und einer Endstellung unterhalb der oberen Biegeform (7) verfahrbaren Übergabering (28) und durch Mittel (30) zur Positionierung der Glasscheibe (3) in Bezug auf den Übergabering (28).

7. Vorrichtung nach Anspruch 6, dadurch gekennzeichnet, daß die Saugplatte (23) zwischen einer Endstellung oberhalb des Endabschnitts des Förderers (2) und einer Endstellung in der Zwischenstation (27) verfahrbar ist.

8. Vorrichtung nach Anspruch 6, dadurch gekennzeichnet, daß die Saugplatte (23) oberhalb des Endabschnitts des Förderers (2) in vertikaler Richtung beweglich gelagert ist, und daß der Übergabering (28) zwischen einer Endstellung unterhalb der in angehobener Stellung befindlichen Saugplatte (23) und einer Endstellung unterhalb der Biegeform (7) verfahrbar ist.

9. Vorrichtung nach einem der Ansprüche 6 bis 8, dadurch gekennzeichnet, daß die Mittel (30) zum Positionieren der Glasscheiben (3) in Bezug auf den Übergabering (28) an dem Übergabering (28) angeordnet sind.

10. Vorrichtung nach einem der Ansprüche 6 bis 8, dadurch gekennzeichnet, daß die Mittel (30) zum Positionieren der Glasscheiben (3) in Bezug auf den Übergabering (28) unabhängig von dem Übergabering (28) in der Zwischenstation (27) oder im Bereich der heb- und senkbar angeordneten Saugplatte (23) (Fig.3) angeordnet sind.

11. Vorrichtung nach einem der Ansprüche 6 bis 10, dadurch gekennzeichnet, daß der Übergabering (28) der Kontur der Glasscheiben entspricht und eine ebene obere Ringfläche aufweist.

12. Vorrichtung nach einem der Ansprüche 6 bis 10, dadurch gekennzeichnet, daß der Übergabering (28) der Kontur der Glasscheiben entspricht und eine im Sinne des Formrings (13,42) leicht gewölbte obere Ringfläche aufweist.

13. Vorrichtung nach einem der Ansprüche 6 bis 12, dadurch gekennzeichnet, daß die den Formring (42) tragenden Schienen (40) in der Biegekammer (5) quer zur den den Übergabering (28) tragenden Schienen (25) verlaufen und daß die Kühlstation seitlich neben der Biegekammer (5) angeordnet ist.

14. Vorrichtung nach Anspruch 13, gekennzeichnet durch zwei auf jeder Seite der Biegekammer (5) angeordnete Kühlstationen und durch zwei Formringe (42), die miteinander bewegungsgekoppelt sind und einen dem Abstand zwischen der Biegestation (5) und der Kühlstation entsprechenden Abstand aufweisen.

## Claims

1. Process for bending glazings (3), according to which the horizontally positioned glazings are heated to the bending temperature in a furnace (1) equipped with a conveyor (2) and are conveyed into a bending chamber (5), where they are raised and applied to an upper, convex bending mould (7), installed above the conveying plane of the glazings, in order to be bent to their final shape and are then conveyed with the aid of a centrally open, annular moulding frame (13), whose periphery corresponds to the final shape of the glazing, into a cooling station (16) positioned downstream of the bending chamber, characterized in that the glazings within the furnace are raised from the conveyor by means of a suction pad (23), are deposited on an annular transfer frame (28), which is positioned in the bending chamber beneath the upper bending mould, in a position such that the glazings are then in the correct position for bending with respect to the upper bending mould.

2. Process according to claim 1, characterized in that the positioning of a glazing (3) on the transfer frame (28) takes place when the preceding glazing is still in the bending chamber (5).

3. Process according to claim 1 or 2, characterized in that the conveying of the bent glazing (3') between the bending chamber (5) and the cooling station (16) and the conveying of the following glazing by the transfer frame (28) take place simultaneously.

4. Process according to any one of the claims 1 to 3, characterized in that in the bending chamber (5) the glazings (3) are raised from the transfer frame (28) and applied to the upper bending mould (7) by a rising, hot gaseous flow.

5. Process according to any one of the claims 1 to 3, characterized in that in the bending chamber (5) the glazings (3) are raised from the transfer frame (28) and applied to the upper bending mould (7) by suction due to a vacuum created across the upper bending mould or in the vicinity of its peripheral edge.

6. Device for bending a glazing (3) having a furnace (1) equipped with a conveyor (2), a bending chamber (5) with an upper, convex bending mould (7) installed so as to move upwards and downwards above the conveying plane of the glazings and means for producing a differential gas pressure in order to raise the glazings (3) from the conveying plane against the upper bending mould (7), a cooling station (16) located downstream of the bending chamber (5) and a centrally open, annular moulding frame (13) displaceable between the bending chamber (7) and the cooling station (16), characterized by a suction pad (23), fitted so as to move above the downstream end section of the conveyor (2), an intermediate station (27) between the bending chamber (5) and said downstream end section of the conveyor (2) and an annular transfer frame (28) displaceable between a position below the suction pad (23) and an extreme position below the upper mould (7) and by means (30) for positioning the glazing (3) relative to the transfer frame (28).

7. Device according to claim 6, characterized in that the suction pad (23) is displaceable between an extreme position above the end section of the conveyor (2) and an extreme position in the intermediate station (27).

8. Device according to claim 6, characterized in that the suction pad (23) is fitted so as to move in the vertical direction above the end section of the conveyor (2) and the transfer frame (28) is displaceable between an extreme position below the suction pad (23) in the upper position, and another extreme position below the upper bending mould (7).

9. Device according to any one of the claims 6 to 8, characterized in that the means (30) for positioning the glazings relative to the transfer frame (28) are installed on said transfer frame (28).

10. Device according to any one of the claims 6 to 8, characterized in that the means (30) for positioning the glazings (3) relative to the transfer frame (28) are installed, independently of the latter, in the intermediate station (27) or in the area of the suction pad (27) installed so as to move upwards and downwards (fig. 3).

11. Device according to any one of the claims 6 to 10, characterized in that the transfer frame (28) corresponds to the contour of the glazings and has a planar, upper, annular surface.

12. Device according to any one of the claims 6 to 10, characterized in that the transfer frame (28) corresponds to the contour of the glazings and has an upper, annular surface bent slightly in the direction of the moulding frame (13, 42).

13. Device according to any one of the claims 6 to 12, characterized in that the rails (40) carrying the moulding frame (42) extend into the bending chamber (5) perpendicular to the rails (25) carrying the transfer frame (28) and the cooling station is installed laterally alongside the bending chamber (5).

14. Device according to claim 13, characterized by two cooling stations placed on either side of the bending chamber (5) and two moulding frames (42) coupled to one another for displacements, separated by a distance corresponding to the distance between the bending chamber (5) and a cooling station.
